# EUROPEAN PATENT APPLICATION

(11) **EP 4 261 261 A1**
(43) Date of publication of application: **18.10.2023**
(21) Application number: 21903435.2
(22) Date of filing: 08.12.2021
(51) Int. Cl.: C09J 11/06, C09J 11/08, C09J 163/00, C09J 163/02, C09J 7/24, C09J 7/25

(54) **ADHESIVE, ADHESIVE FOR BONDING DISSIMILAR MATERIALS, ADHESIVE SHEET, AND ADHESIVE SHEET FOR BONDING DISSIMILAR MATERIALS**

(30) Priority: 09.12.2020 JP 2020204250
(71) Applicant: Mitsubishi Chemical Corporation, Chiyoda-ku Tokyo 100-8251 (JP)
(72) Inventor: TAKAGI, Seiji, Tokyo 100-8251 (JP); IKEDA, Masashi, Tokyo 100-8251 (JP)
(74) Representative: Vossius & Partner Patentanwälte Rechtsanwälte mbB
(86) International application number: PCT/JP2021/045142
(87) International publication number: WO 2022/124336

(57) **Abstract**

Provided is an epoxy adhesive capable of enabling cohesive failure rather than boundary separation even when used to bond dissimilar materials to each other, while maintaining bond strength. The epoxy adhesive includes an epoxy resin (A) and a curing agent (B), with the epoxy resin (A) including a bisphenol-A epoxy resin (A1), a bisphenol-F epoxy resin (A2) and a rubber-modified epoxy resin (A3). The content ratio [(A1)/(A2)] of the bisphenol-A epoxy resin (A1) to the bisphenol-F epoxy resin (A2) is less than 2.7.

## Description

### Technical Field

The present disclosure relates to an adhesive. Specifically, the present disclosure relates to an adhesive capable of firmly bonding dissimilar materials when used to stick the dissimilar materials to each other (particularly to bond dissimilar metals to each other).

### Background Art

A cured product of a resin composition containing an epoxy resin as the main component is excellent in many properties including dimensional stability, mechanical strength, electrical insulation, thermal resistance, water resistance, chemical resistance, and the like, and is used as a structural adhesive for structural panels of vehicles, etc.

Nowadays, in the automotive field, an adhesive is increasingly used together with rivet joining and spot welding. For this purpose, structural adhesives with high bond strength are usually used, and one with high shear bond strength is selected.

In the case of an epoxy adhesive to be used in such an application, rubber, a reinforcing agent, minute polymer particles, and the like are added to an epoxy resin to improve the bond strength of the adhesive or impart impact properties to the adhesive. For example, PTL 1 states that the impact resistance and peel strength of a cured product obtained by adding a rubber-modified epoxy resin and a reactive reinforcing agent are improved. In addition, PTL 2 states that adding an epoxy resin and minute polymer particles makes it possible to achieve high bond strength while maintaining a high elastic modulus.

### Citation List

### Patent Literature

PTL 1: JP 2010-523800A
PTL 2: JP 2015-182248A

### Summary

### Technical Problem

However, currently, in order to reduce the load on the environment, attempts have been made to reduce the weight of vehicle bodies, and a wide variety of materials such as aluminum and carbon fiber reinforced plastic (CFRP) are used for vehicles such as automobiles in addition to iron, which is a conventionally-used common material, but it is known that, in the case of bonding of dissimilar materials, a problem of bonding failure (i.e., boundary separation, etc.), which does not occur in the case of bonding of the same materials, is likely to arise.

Under these current circumstances, when the adhesives disclosed in PTL 1 and PTL 2 are used to bond dissimilar materials to each other, the adhesion to the materials is poor in a region where a small amount of rubber, (a) reinforcing agent, or minute polymer particles is used, and thus there is a problem in that boundary separation is likely to occur. Meanwhile, it was found that, although using a large amount of rubber enables cohesive failure, there is a problem in that the bond strength decreases due to a significant decrease in the elastic modulus, which is critical in the case of using the adhesives as a structural adhesive.

Under the above circumstances, the present disclosure provides an epoxy adhesive capable of enabling cohesive failure rather than boundary separation even when used to bond dissimilar materials, while maintaining bond strength.

### Solution to Problem

In view of the foregoing circumstances, the inventors of the present disclosure carried out intensive studies and found that the aforementioned problem can be solved by using an adhesive containing an epoxy resin (A) that includes a bisphenol-A epoxy resin (A1), a bisphenol-F epoxy resin (A2), and a rubber-modified epoxy resin (A3), and a curing agent (B), at a specific compositional ratio. A specific description will be given below. Conventionally, in the case of using a bisphenol-A epoxy resin (A1) and a bisphenol-F epoxy resin (A2) together, the amount of the bisphenol-A epoxy resin (A1) is usually much larger than that of the bisphenol-F epoxy resin (A2), in order to improve the elastic modulus of a cured product and increase the glass-transition temperature. However, the inventors found that, when dissimilar materials are bonded to each other, setting the content ratio of the bisphenol-A epoxy resin (A1) to the bisphenol-F epoxy resin (A2) to be smaller than or equal to a specific value surprisingly makes it possible to improve the adhesion while maintaining the bond strength, thus enabling cohesive failure rather than boundary separation.

Specifically, the present disclosure provides [1] to [15] below.
[1] An epoxy adhesive including:
   an epoxy resin (A); and
   a curing agent (B),
   wherein the epoxy resin (A) includes a bisphenol-A epoxy resin (A1), a bisphenol-F epoxy resin (A2), and a rubber-modified epoxy resin (A3), and
   a content ratio [(A1)/(A2)] of the bisphenol-A epoxy resin (A1) to the bisphenol-F epoxy resin (A2) is less than 2.7.
[2] The epoxy adhesive according to [1], including at least one selected from the group consisting of a carboxy group terminated butadiene nitrile rubber modified epoxy resin and a nitrile butadiene rubber modified epoxy resin, as the rubber-modified epoxy resin (A3).
[3] The epoxy adhesive according to [1] or [2], wherein a content of the rubber-modified epoxy resin (A3) is 5 to 45 mass% with respect to the entire epoxy resin (A).
[4] The epoxy adhesive according to any one of [1] to [3], wherein the epoxy resin (A) further includes an aromatic ring-containing epoxy resin (A4) that is solid at 25°C and is different from the (A1) to (A3).
[5] The epoxy adhesive according to any one of [1] to [4], wherein a content of the epoxy resin that is solid at 25°C is 50 mass% or more with respect to the entire epoxy resin (A).
[6] The epoxy adhesive according to any one of [1] to [5], wherein the curing agent (B) includes dicyandiamide.
[7] The epoxy adhesive according to any one of [1] to [6], further including minute polymer particles with a core-shell structure (C).
[8] The epoxy adhesive according to any one of [1] to [7], wherein the epoxy adhesive is solid at 25°C.
[9] The epoxy adhesive according to any one of [1] to [8], wherein the epoxy adhesive has a viscosity of 0.01 to 5000 Pa·s at 60°C.
[10] The epoxy adhesive according to any one of [1] to [9], wherein the epoxy adhesive is to be used to bond dissimilar materials.
[11] An adhesive sheet including the epoxy adhesive according to any one of [1] to [9].
[12] An adhesive sheet for bonding dissimilar materials, including the epoxy adhesive according to [10].
[13] An adhesive sheet having an adhesive layer including an epoxy adhesive that includes an epoxy resin (A) and a curing agent (B), the epoxy resin (A) including a bisphenol-A epoxy resin (A1), a bisphenol-F epoxy resin (A2) and a rubber-modified epoxy resin (A3), wherein the adhesive layer has a thickness of 0.1 to 2 mm.
[14] The adhesive sheet according to [13], wherein the adhesive layer is an adhesive layer constituted by a nonwoven fabric that is impregnated with the epoxy adhesive.
[15] The adhesive sheet according to [13] or [14], including a release film on at least one surface of the adhesive layer.

### Advantageous Effects of Disclosure

The epoxy adhesive according to the present disclosure is capable of enabling cohesive failure rather than boundary separation when used to bond dissimilar materials, while maintaining bond strength. Accordingly, it is possible to provide an adhesive with favorable adhesive properties.

### Description of Embodiment

Hereinafter, the present disclosure will be described in detail.

Note that the term "epoxy resin" as used herein is generally used as a term for a name of one of the categories of thermosetting resins or a term for a name of the category of chemical substances that are compounds having one or more epoxy groups in the molecule, and is used in the latter meaning in the present disclosure. Also, in the present disclosure, the definition of the epoxy resin encompasses not only polymers with a certain degree of polymerization but also monomers as long as these compounds have one or more epoxy groups in the molecule.

Note that the "molecular weight" as used herein means a number-average molecular weight unless otherwise stated. The "ordinary temperature" means 25°C, and "solid at 25°C" means that the softening point is 25°C or higher, or the viscosity at 25°C is 1000Pa·s or more.

An expression "X to Y" (X and Y are any numbers) as used herein encompasses "X or more and Y or less" as well as "preferably more than X" or "preferably less than Y" unless otherwise stated.

Also, an expression "X or more" (X is any number) is intended to encompass "preferably more than X", and an expression "Y or less" (Y is any number) is intended to encompass "preferably less than Y".

### Epoxy Resin (A)

In an epoxy adhesive according to the present disclosure, an epoxy resin (A) is used as a curable component, and the epoxy resin (A) includes a bisphenol-A epoxy resin (A1), a bisphenol-F epoxy resin (A2), and a rubber-modified epoxy resin (A3), which are essential constituent components of the epoxy adhesive.

In the epoxy adhesive according to the present disclosure, a content ratio [(A1)/(A2)] of the bisphenol-A epoxy resin (A1) to the bisphenol-F epoxy resin (A2) needs to be less than 2.7, preferably less than 2.5, more preferably less than 1.5, even more preferably less than 1.0, even more preferably less than 0.9, and even more preferably less than 0.8.

If the content ratio [(A1)/(A2)] is 2.7 or more, the failure mode is boundary separation, and the effects of the present disclosure is not sufficiently exhibited. Accordingly, it is not preferable that the content ratio is 2.7 or more.

Note that the lower limit of the content ratio is not particularly limited and is, for example, 0.01 or more.

Examples of the bisphenol-A epoxy resin (A1) used in the present disclosure include commercially available products such as: EPON825, jER826, jER827, jER828, jER834, and jER1001 (manufactured by Mitsubishi Chemical Corporation); EPICLON850 (manufactured by DIC Corporation); Epotohto YD-128 (manufactured by Nippon Steel & Sumikin Chemical Co., Ltd.); DER-331 and DER-332 (manufactured by Dow Chemical Japan Limited); and Bakelite EPR154, Bakelite EPR162, Bakelite EPR172, Bakelite EPR173, and Bakelite EPR174 (manufactured by Bakelite AG). Of these products, jER828 and jER1001 are preferable in terms of the elastic modulus and the glass-transition temperature of a cured product of the epoxy adhesive.

The bisphenol-A epoxy resins (A1) listed above may be used alone or in combination of two or more.

The number-average molecular weight of the bisphenol-A epoxy resin (A1) is preferably 200 to 100000, more preferably 200 to 80000, and even more preferably 200 to 60000.

If the number-average molecular weight is too low, the workability of the adhesive tends to be impaired due to an excessive decrease in viscosity. Also, if the number-average molecular weight is too high, the workability tends to be impaired due to a decrease in solubility in another monomer and an excessive increase in viscosity.

Note that the "number-average molecular weight" as used herein is a polystyrene equivalent measured through gel permeation chromatography (GPC).

The epoxy equivalent of the bisphenol-A epoxy resin (A1) is preferably 20000 or less, more preferably 10000 or less, and even more preferably 6000 or less.

If the epoxy equivalent is too high, the workability during a blending process tends to be impaired due to a decrease in solubility in another monomer. The lower limit of the epoxy equivalent is not particularly limited and is, for example, 50 or more.

Note that the "epoxy equivalent" as used herein is a value measured in conformity with JIS-K7236: 2001.

The softening point of the bisphenol-A epoxy resin (A1) is preferably 160°C or lower, more preferably 140°C or lower, and even more preferably 120°C or lower.

If the softening point is too high, the workability of the adhesive tends to be impaired due to an increase in viscosity at ordinary temperature after the blending process. The lower limit of the softening point is not particularly limited and is, for example, -50°C or higher.

Note that the "softening point" as used herein is a value measured in conformity with JIS-K7234: 2008 (ring-and-ball method).

Examples of the bisphenol-F epoxy resin (A2) used in the present disclosure include commercially available products such as: jER806, jER807, jER4005P, jER4007P, jER4010P, and jER1750 (manufactured by Mitsubishi Chemical Corporation); EPICLON830 (manufactured by DIC Corporation); Epotohto YD-170 and Epotohto YD-175 (manufactured by Nippon Steel & Sumikin Chemical Co., Ltd.); Bakelite EPR169 (manufactured by Bakelite AG); and GY281, GY282, and GY285 (manufactured by Huntsman Advanced Materials LLC). Of these products, jER806, jER807, and jER4005P are preferable in terms of excellent adhesion of the cured epoxy adhesive.

The bisphenol-F epoxy resins (A2) listed above may be used alone or in combination of two or more.

The number-average molecular weight of the bisphenol-F epoxy resin (A2) is preferably 200 to 100000, more preferably 200 to 80000, and even more preferably 200 to 60000.

If the number-average molecular weight is too low, the workability of the adhesive tends to be impaired due to an excessive decrease in viscosity. Also, if the number-average molecular weight is too high, the workability tends to be impaired due to a decrease in solubility in another monomer and an excessive increase in viscosity.

The epoxy equivalent of the bisphenol-F epoxy resin (A2) is preferably 20000 or less, more preferably 10000 or less, and even more preferably 6000 or less.

If the epoxy equivalent is too high, the workability during a blending process tends to be impaired due to a decrease in solubility in another monomer. The lower limit of the epoxy equivalent is not particularly limited and is, for example, 50 or more.

The softening point of the bisphenol-F epoxy resin (A2) is preferably 160°C or lower, more preferably 140°C or lower, and even more preferably 120°C or lower.

If the softening point is too high, the workability of the adhesive tends to be impaired due to an increase in viscosity at ordinary temperature after the blending process. The lower limit of the softening point is not particularly limited and is, for example, -50°C or higher.

In addition to the products listed above, commercially available products in which both a bisphenol-A epoxy resin (A1) and a bisphenol-F epoxy resin (A2) are mixed can also be used. Examples of such commercially available products include jER4250 and jER4275 (manufactured by Mitsubishi Chemical Corporation).

Examples of the rubber-modified epoxy resin (A3) used in the present disclosure include epoxy terminated adducts formed using an epoxy resin and at least one type of non-cross-linked liquid rubber having an epoxide reactive group (e.g., amino group or carboxy group).

The above-described rubber-modified epoxy resins (A3) may be used alone or in combination of two or more.

There is no particular limitation on the epoxy resin used as a raw material of the rubber-modified epoxy resin (A3), and examples thereof include a bisphenol epoxy resin, a naphthalene epoxy resin, a biphenyl epoxy resin, a glycidyl amine epoxy resin, a cyclic epoxy resin, a dicyclopentadiene epoxy resin, a phenol novolac epoxy resin, and an ortho-cresol novolac epoxy resin.

The non-cross-linked liquid rubber used as a raw material of the rubber-modified epoxy resin (A3) is preferably a conjugated diene homopolymer or conjugated diene copolymer, and particularly a diene/nitrile copolymer. The conjugated diene rubber is preferably butadiene or isoprene, and particularly preferably butadiene. The nitrile monomer is preferably acrylonitrile. The copolymer is preferably a butadiene-acrylonitrile copolymer.

The glass-transition temperature (Tg) of the non-cross-linked liquid rubber is preferably 20°C or lower, more preferably 10°C or lower, and even more preferably 0°C or lower. The lower limit of the glass-transition temperature is not particularly limited and is, for example, -100°C or higher.

Note that the "glass-transition temperature" as used herein is expressed as a temperature at the point of inflection of the DSC curve obtained by measuring a DSC curve of a sample using a differential scanning calorimeter.

The non-cross-linked liquid rubber preferably has an average of 1.5 to 2.5 epoxide reactive terminal groups per molecule, and more preferably an average of 1.8 to 2.2 epoxide reactive terminal groups per molecule.

The number-average molecular weight of the non-cross-linked liquid rubber is preferably 500 to 10000, and more preferably 1000 to 58000.

The rubber-modified epoxy resin (A3) is preferably a carboxy group terminated butadiene nitrile rubber (CTBN) modified epoxy resin or a nitrile butadiene rubber (NBR) modified epoxy resin, and more preferably a carboxy group terminated butadiene nitrile rubber (CTBN) modified epoxy resin.

Examples of commercially available products of the rubber-modified epoxy resin (A3) include the ADEKA RESIN EPR series (EPR-1415-1, EPR-2000, EPR-2007, EPR-1630) manufactured by ADEKA Corporation, EPON Resin 58005 and EPON Resin 58006 manufactured by Momentive, and the Hypox series (Hypox RA840, Hypox RA 1340, Hypox RF 1341) manufactured by CVC. Of these products, the ADEKA RESIN EPR series manufactured by ADEKA Corporation is preferable in terms of excellent adhesion and excellent elastic modulus after curing, and EPR-1630 is more preferable.

The number-average molecular weight of the rubber-modified epoxy resin (A3) is preferably 200 to 200000, more preferably 200 to 100000, and even more preferably 200 to 80000.

If the number-average molecular weight is too low, the workability of the adhesive tends to be impaired due to an excessive decrease in viscosity. Also, if the number-average molecular weight is too high, the workability tends to be impaired due to a decrease in solubility in another monomer and an excessive increase in viscosity.

The epoxy equivalent of the rubber-modified epoxy resin (A3) is preferably 10000 or less, more preferably 7000 or less, and even more preferably 5000 or less.

If the epoxy equivalent is too high, a flexible component is not dispersed in a cured product. Therefore, stress concentrates at a portion where it is generated, and thus bond strength tends to decrease. The lower limit of the epoxy equivalent is not particularly limited and is, for example, 50 or more.

The softening point of the rubber-modified epoxy resin (A3) is preferably 200°C or lower, more preferably 180°C or lower, and even more preferably 160°C or lower.

If the softening point is too high, the workability of the adhesive tends to be impaired due to an increase in viscosity at ordinary temperature after the blending process. The lower limit of the softening point is not particularly limited and is, for example, -50°C or higher.

In the present disclosure, it is preferable to further use an aromatic ring-containing epoxy resin (A4) (which is however different from the bisphenol-A epoxy resin (A1), the bisphenol-F epoxy resin (A2), and the rubber-modified epoxy resin (A3)) that is solid at ordinary temperature in terms of low water absorbency, the elastic modulus of a cured product, and the glass-transition temperature. Examples of the aromatic ring-containing epoxy resin include a phenol aralkyl epoxy resin ("YX7700" manufactured by Mitsubishi Chemical Corporation is commercially available) and biphenyl epoxy resin ("YX4000" manufactured by Mitsubishi Chemical Corporation is commercially available).

The aromatic ring-containing epoxy resins (A4) listed above that are solid at ordinary temperature may be used alone or in combination of two or more.

The number-average molecular weight of the aromatic ring-containing epoxy resin (A4) that is solid at ordinary temperature is preferably 200 to 100000, more preferably 200 to 80000, and even more preferably 200 to 60000.

If the number-average molecular weight is too low, the workability of the adhesive tends to be impaired due to an excessive decrease in viscosity. Also, if the number-average molecular weight is too high, the workability tends to be impaired due to a decrease in solubility in another monomer and an excessive increase in viscosity.

The epoxy equivalent of the aromatic ring-containing epoxy resin (A4) that is solid at ordinary temperature is preferably 10000 or less, more preferably 7000 or less, and even more preferably 5000 or less.

If the epoxy equivalent is too high, the workability during the blending process tends to be impaired due to a decrease in solubility in another monomer. The lower limit of the epoxy equivalent is not particularly limited and is, for example, 50 or more.

The softening point of the aromatic ring-containing epoxy resin (A4) that is solid at ordinary temperature is preferably 160°C or lower, more preferably 140°C or lower, and even more preferably 120°C or lower.

If the softening point is too high, the viscosity at ordinary temperature increases after the blending process, and thus the workability of the adhesive tends to be impaired. The lower limit of the softening point is not particularly limited and is, for example, -50°C or higher.

The content of the epoxy resin (A) used in the present disclosure is preferably 30 to 100 mass%, more preferably 40 to 100 mass%, and even more preferably 50 to 100 mass%, with respect to the entire epoxy adhesive.

The content of the bisphenol-A epoxy resin (A1) is preferably 0.01 to 70 mass%, more preferably 0.1 to 60 mass%, and even more preferably 1 to 50 mass%, with respect to the entire epoxy resin (A) (the total content of all of the epoxy resins (A) contained in the epoxy adhesive).

The content of the bisphenol-F epoxy resin (A2) is preferably 1 to 70 mass%, more preferably 5 to 60 mass%, and even more preferably 10 to 50 mass%, with respect to the entire epoxy resin (A).

In the case of the composition containing both the bisphenol-A epoxy resin (A1) and the bisphenol-F epoxy resin (A2), the composition is divided according to the mass ratio to calculate the contents of these epoxy resins. For example, in the case where the content of the composition containing the bisphenol-A epoxy (A1) and the bisphenol-F epoxy (A2) at a ratio of 1:1 is 10 mass%, the calculated content of (A1) is 5 mass% and the calculated content of (A2) is 5 mass%.

The content of the rubber-modified epoxy resin (A3) is preferably 0.01 to 60 mass%, more preferably 1 to 50 mass%, and even more preferably 5 to 40 mass%, with respect to the entire epoxy resin (A).

Also, the content of the rubber-modified epoxy resin (A3) is preferably 0.01 to 55 mass%, more preferably 1 to 45 mass%, and even more preferably 5 to 40 mass%, with respect to the entire curable components other than the curing agent (B).

The content of the aromatic ring-containing epoxy resin (A4) that is solid at ordinary temperature is preferably 0 to 80 mass%, more preferably 1 to 70 mass%, and even more preferably 5 to 60 mass%, with respect to the entire epoxy resin (A).

The content ratio [(A1)/(A3)] of the bisphenol-A epoxy resin (A1) to the rubber-modified epoxy resin (A3) is preferably less than 3.0, more preferably less than 2.5, even more preferably less than 2.0, and even more preferably less than 1.5. If the content ratio [(A1)/(A3)] is too high, the failure mode tends to be boundary separation. Accordingly, such a high content ratio is not preferable.

Note that the lower limit of the content ratio is not particularly limited and is, for example, 0.01 or more.

In the epoxy adhesive according to the present disclosure, it is also preferable that the content of the bisphenol-A epoxy resin (A1) is smaller than that of the bisphenol-F epoxy resin (A2), and the content of the bisphenol-A epoxy resin (A1) is smaller than 1.5 times the content of the rubber-modified epoxy resin (A3).

The epoxy adhesive according to the present disclosure may further contain another epoxy resin other than (A1) to (A4). Specific examples thereof include various epoxy resins such as an alcohol epoxy resin, a naphthalene epoxy resin, a phenol novolac epoxy resin, a cresol novolac epoxy resin, a phenol aralkyl epoxy resin, a biphenyl epoxy resin, a triphenylmethane epoxy resin, a dicyclopentadiene epoxy resin, a glycidyl ester epoxy resin, a glycidyl amine epoxy resin, a polyfunctional phenol epoxy resin, and an aliphatic epoxy resin.

The content of the epoxy resin that is solid at ordinary temperature in the epoxy resin (A) used in the present disclosure is preferably 50 mass% or more, more preferably 55 mass% or more, and even more preferably 60 mass% or more, with respect to the entire epoxy resin (A). The upper limit of the epoxy resin that is solid at ordinary temperature is not particularly limited and is, for example, 100 mass% or less.

### Curing Agent (B)

Examples of the curing agent (B) used in the present disclosure include amines, acid anhydrides (carboxylic acid anhydrides), phenols (e.g., novolac resins), mercaptans, Lewis acid-amine complexes, onium salts, and imidazole. Specific examples thereof include the curing agents listed in "Review: Epoxy Resins Vol. 1 (edited by The Japan Society of Epoxy Resin Technology, First Edition, published in November, 2003)" Chapter 3, and "Review: Epoxy Resins Recent Progress I (edited by The Japan Society of Epoxy Resin Technology, First Edition, published in March, 2009)" Chapter 2. Of these curing agents, amines are preferable in terms of adhesive properties.

The curing agents (B) listed above may be used alone or in combination of two or more.

Examples of the amines include aromatic amines such as diaminodiphenylmethane and diaminodiphenyl sulfone, aliphatic amines, imidazole derivatives, dicyandiamide, tetramethylguanidine, thiourea-added amines, and isomers thereof and modifications thereof. Of these amines, dicyandiamide is particularly preferable in terms of the excellent pot life of a matrix resin composition.

The content of the curing agent (B) used in the present disclosure is preferably 0.01 to 30 mass%, more preferably 0.1 to 25 mass%, and even more preferably 1 to 20 mass%, with respect to the entire epoxy resin adhesive.

### Minute Polymer Particles with Core-Shell Structure (C)

The epoxy adhesive according to the present disclosure may also contain minute polymer particles with a core-shell structure (C). The term "minute polymer particles with a core-shell structure (C)" means known commonly used core-shell polymer, namely polymer particles in which the central portion (core portion) and the outer peripheral portion (shell portion) have different molecular structures.

Examples of a component constituting the core portions of the minute polymer particles with a core-shell structure (C) include butadiene rubber (BR), acrylic rubber (ACM), silicone rubber (Si), butyl rubber (IIR), nitrile rubber (NBR), styrene-butadiene rubber (SBR), isoprene rubber (IR), and ethylenepropylene rubber (EPR). Of these components, butadiene rubber is preferable.

It is preferable that a component constituting the shell portions of the minute polymer particles with a core-shell structure (C) is graft-polymerized with the core portion and is covalently bonded to the polymer constituting the core component.

Examples of the component constituting the shell portions include acrylic acid ester monomers, methacrylic acid ester monomers, and aromatic vinyl monomers.

Examples of the minute polymer particles with a core-shell structure (C) include commercially available products such as the KANE-ACE series (B-11A, B-22, B-561, FM-21, M-701, M-711, M-300, FM-40, M-210, Pa-20, PA101, MR-01, MX-153, MX257, MX154, MX-960, MX-136, MX-965, MX-217, MX227M75, MX-334M75, MX-416, MX-451, etc.) manufactured by KANEKA Corporation, and METABLEN (METABLEN C, METABLEN E, METABLEN W, METABLEN S, etc.) manufactured by Mitsubishi Chemical Corporation.

Of these products, minute polymer particles in which a core portion is made of rubber are preferable in terms of flexibility and adhesion. Although the minute polymer particles (C) may be directly used in the form of particles, or a dispersion obtained by dispersing the minute polymer particles (C) in another solution or resin may be used, it is more preferable to use a dispersion obtained by the minute polymer particles (C) in an epoxy resin from the viewpoint of uniformly dispersing the minute polymer particles (C) in another resin. Specifically, MX-153, MX-154, MX-136, and MX-267 are preferable.

The minute polymer particles with a core-shell structure (C) listed above may be used alone or in combination of two or more.

The primary particle diameter of the minute polymer particles with a core-shell structure (C) used in the present disclosure is preferably 10 to 100000 nm, more preferably 15 to 50000 nm, and even more preferably 20 to 10000 nm, in terms of the elastic modulus, extensibility, and shear strength of a cured product of the epoxy resin.

Note that the "primary particle diameter" refers to the volume-average particle diameter of primary particles, and can be measured using a Nanotrac particle size distribution analyzer (manufactured by Nikkiso Co., Ltd.).

In the case of using a dispersion obtained by dispersing the minute polymer particles with a core-shell structure (C) in the bisphenol-A epoxy (A1) or bisphenol-F epoxy (A2), when the content ratios (A1)/(A2) and (A1)/(A3) are calculated, (A1) and (A2) used to disperse the minute polymer particles are included in the calculation of these content ratios.

The content of the minute polymer particles with a core-shell structure (C) is preferably 0 to 50 mass%, more preferably 1 to 40 mass%, and even more preferably 2 to 30 mass%, with respect to the entire epoxy adhesive excluding the curing agent (B).

The epoxy adhesive according to the present disclosure may also contain a curing accelerator (D) from the viewpoint of enhancing the curing activity of the curing agent (B). For example, when dicyandiamide or the like is used alone as the curing agent (B), the curing temperature is high. Accordingly, the curing accelerator (D) can be used in order to enhance the curing activity of dicyandiamide or the like. Examples of the curing accelerator for dicyandiamide include urea derivatives such as 3-phenyl-1,1-dimethylurea, 3-(3,4-dichlorophenyl)-1,1-dimethylurea (DCMU), 2,4-diamino-6-(2-methylimidazolyl-(1))-ethyl-s-triazine, 3-(3-chloro-4-methylphenyl)-1,1-dimethylurea, 4,4-methylenebis(1,1-dimethyl-3-phenylurea), and 2,4-bis(3,3-dimethylureide)toluene, and imidazole derivatives. Of these curing accelerators, urea derivatives are preferable, and 2,4-diamino-6-(2-methylimidazolyl-(1))-ethyl-s-triazine is more preferable.

The content of the curing accelerator (D) used in the present disclosure is preferably 0.01 to 30 mass%, more preferably 0.05 to 25 mass%, and even more preferably 0.1 to 20 mass%, with respect to the entire total of the curing agent (B) and the curing accelerator (D).

### Epoxy Adhesive

The epoxy adhesive according to the present disclosure contains three components as the epoxy resin (A), namely the bisphenol-A epoxy resin (A1), the bisphenol-F epoxy resin (A2), and the rubber-modified epoxy resin (A3), and the curing agent (B), which are essential constituent components. It is preferable that the epoxy adhesive further contains the minute polymer particles with a core-shell structure (C) and the curing accelerator (D).

Moreover, in the epoxy adhesive according to the present disclosure, another blend component can be used as needed within a range that does not inhibit the effects of the present disclosure (e.g., the content is 5 mass% or less with respect to the entire epoxy adhesive). Examples of the other blend component include dehydrants such as calcium oxide, colorants such as pigments and dyes, extender pigments, ultraviolet absorbers, antioxidants, stabilizers (anti-gelling agents), plasticizers, leveling agents, antifoaming agents, silane coupling agents, antistatic agents, flame retardants, lubricants, viscosity reducing agents, shrinkage reducing agents, organic fillers, inorganic fillers, thermoplastic resins, drying agents, and dispersants.

It is preferable that the epoxy adhesive according to the present disclosure is solid at ordinary temperature from the viewpoint of preventing dripping when used as an adhesive to bond dissimilar materials.

Meanwhile, the softening point of the epoxy adhesive is preferably 160°C or lower, more preferably 140°C or lower, and even more preferably 120°C or lower, from the viewpoint of smooth bonding to an adherend. The lower limit of the softening point is not particularly limited and is, for example, 30°C or higher.

The viscosity of the epoxy adhesive according to the present disclosure is preferably 0.01 to 20000 Pa·s, more preferably 0.01 to 10000 Pa s, even more preferably 0.01 to 8000 Pa s, and even more preferably 0.01 to 5000 Pa s, at 60°C and 1 atm. The viscosity may also be preferably 0.05 to 4000 Pa s, 0.1 to 3000 Pa s, 1 to 1000 Pa s, or 10 to 800 Pa s.

Both when the viscosity is too high and when the viscosity is too low, ease of coating the adhesive on a base material tends to be impaired.

Note that the viscosity is measured at 60°C using a B-type rotational viscometer (Brookfield viscometer) in accordance with JIS Z 8803.

The epoxy adhesive according to the present disclosure is favorably used to bond dissimilar materials. There is no particular limitation on a combination of dissimilar materials, and examples of the combination include combinations of two materials selected from various materials such as a hot-rolled steel plate, a cold-rolled steel plate, a high-tensile steel plate, a stainless steel plate, a plated steel plate (e.g., zinc plated steel plate or zinc-nickel steel plate), an aluminum plate, an aluminum alloy plate (e.g., aluminum-manganese alloy plate or aluminum-magnesium alloy plate), a fiber-reinforced plastic (FRP) plate reinforced using carbon fibers or glass fibers, and carbon fiber-reinforced plastics (CFRPs). In particular, the epoxy adhesive according to the present disclosure is favorably used to bond dissimilar metals and CFRPs. It is particularly preferable to use the epoxy adhesive according to the present disclosure to bond metals typified by iron and aluminum among dissimilar metals.

### Method for Manufacturing Epoxy Adhesive

The epoxy adhesive according to the present disclosure can be manufactured by mixing the components.

In the above-mentioned method of mixing the components, it is preferable to warm some of the epoxy resins and a liquefiable component into liquids and mix these liquids. The mixing temperature is preferably 30°C or higher, more preferably 40°C or higher, and even more preferably 50°C or higher. Meanwhile, the mixing temperature is preferably 150°C or lower, more preferably 140°C or lower, and even more preferably 120°C or lower. If the mixing temperature is lower than the lower limit, mixing failure tends to occur due to solidification of the components. If the mixing temperature is higher than the upper limit, the mixture tends to polymerize to form a gel during the mixing.

The mixing time is usually 1 minute or more, preferably 10 minutes or more, and more preferably 20 minutes or more, whereas the mixing time is usually 24 hours or less, preferably 18 hours or less, and more preferably 12 hours or less. If the mixing time is shorter than the lower limit, the components are not likely to be uniformly mixed. If the mixing time is longer than the upper limit, the mixture tends to polymerize to form a gel during the mixing.

It is possible to use, as the above-mentioned method of mixing the components, various methods in which shearing force is generated and that are commonly used to mix an epoxy adhesive, such as stirring, shaking, and kneading. The mixing method is selected as appropriate according to the physical properties, production amount, and the like of the adhesive.

The obtained epoxy adhesive may be in a uniform state or in a nonuniform state in which the particles are dispersed. The state is selected as appropriate according to the application of the adhesive.

The epoxy adhesive according to the present disclosure is preferably a single-component adhesive in terms of handleability.

The epoxy adhesive according to the present disclosure can be used to join dissimilar members into a laminate as follows. That is to say, after the epoxy adhesive according to the present disclosure is applied to one or both of a plurality of members having different linear expansion coefficients, the dissimilar members are bonded to each other with the adhesive therebetween, and the adhesive is cured.

There is no particular limitation on the curing conditions. For example, when a single-component adhesive is used, the adhesive is preferably cured within 60 minutes, and more preferably 30 minutes, by heating the adhesive to a temperature of 80°C or higher, preferably 130°C or higher, and more preferably 150°C or higher, and thus a laminate formed by joining dissimilar members can be obtained.

### Adhesive Sheet

The epoxy adhesive according to the present disclosure can be favorably used for an adhesive sheet that includes the epoxy adhesive, and in particular, it is particularly preferable to use the epoxy adhesive for an adhesive sheet for bonding dissimilar materials to be used to bond dissimilar materials.

For example, the adhesive sheet that includes the epoxy adhesive according to the present disclosure may be an adhesive sheet having, on a base film, an adhesive layer that is formed using the epoxy adhesive, or an adhesive sheet having an adhesive layer that is formed by impregnating a support with the epoxy adhesive.

In the case where an adhesive layer that includes the epoxy adhesive is provided on a base film, it is preferable to use, as the base film, for example, a release film provided with releasability using silicone, melamine, or the like, and specifically, a PET film, a polyethylene film, a polypropylene film, a fluorine film, a polyimide film, or the like that is provided with releasability can be used.

In the case where a support is impregnated with the epoxy adhesive, it is possible to use, for example, a nonwoven fabric, a porous material, or the like as the support, and in particular, a nonwoven fabric is preferable.

The density of the support is preferably 0.05 g/cm³ or more, more preferably 0.08 g/cm³ or more, and even more preferably 0.1 g/cm³ or more, from the viewpoint of suppression of resin flow during pressurization for bonding a plurality of members, resin retentivity of a sheet-shaped adhesive, and an improvement in adhesive properties that depend on rigidity of the adhesive layer.

Also, the density of the support is preferably 1.0 g/cm³ or less, more preferably 0.9 g/cm³ or less, and even more preferably 0.8 g/cm³ or less, from the viewpoint of an improvement in an ability of the support in the adhesive sheet to be impregnated with the resin, weight reduction, and an improvement in boundary adhesion.

The thickness of the adhesive layer on the adhesive sheet is preferably 0.1 to 2.0 mm. Forming an adhesive layer with a thickness within the numerical range above makes it possible to improve the adhesive properties and reduce warping when bonding a plurality of members having different linear expansion coefficients to each other.

In particular, the thickness of the adhesive layer is preferably 0.2 mm or more, more preferably 0.3 mm or more, and even more preferably 0.4 mm or more.

Moreover, the thinner the adhesive layer is, the higher the tension-shear bond strength after bonding is, and therefore the thickness of the adhesive layer is preferably 1.8 mm or less, more preferably 1.6 mm or less, and even more preferably 1.4 mm or less.

The adhesive sheet can be obtained by shaping the epoxy adhesive into a sheet shape.

The epoxy adhesive can be shaped into a sheet shape using, for example, the following method. That is, the epoxy adhesive is layered on or applied to a base film, and then a laminate having a configuration of base film/epoxy adhesive/base film is obtained. Specific examples of such a method include: a method in which a sheet shaping apparatus such as an extrusion laminator (e.g., T-die), a calender roll, or a double-belt press is used; comma coating; gravure coating; reverse coating; knife coating; dip coating; spray coating; air-knife coating; spin coating; roll coating; printing; dipping; slide coating; curtain coating; die coating; casting; bar coating; and extrusion coating.

When the above-mentioned sheet shaping is performed, an impregnation step of impregnating a support with the epoxy adhesive may also be performed.

In the impregnation step, it is sufficient that the impregnation with the epoxy adhesive is performed using a known method. Examples of the impregnation method include: lamination in which a support and a base film on which the epoxy adhesive is provided in the sheet shaping step are laminated such that a configuration of base film/epoxy adhesive/support/epoxy adhesive/base film is obtained, and then impregnation is performed using a vacuum laminator, a calender roll, a double-belt press, or the like; dip-nipping in which a support is directly impregnated with the epoxy adhesive; kiss coating; spraying; and curtain coating.

It is preferable to adjust the thickness of a support and the amount of the epoxy adhesive with which the support is impregnated such that the thickness of the adhesive layer is 0.1 to 2.0 mm.

A laminate obtained using the epoxy adhesive according to the present disclosure can be used as a structural member (e.g., a panel component, a skeleton component, or an undercarriage) for a transport apparatus such as a vehicle, aircraft, or vessel. In particular, it is preferable to use the laminate as a structural panel. The laminate is useful particularly as a structural panel for a vehicle.

### Examples

Hereinafter, the present disclosure will be described in further detail by way of examples, but the present disclosure is not limited to the examples below and may include other matter that does not depart from the gist of the present disclosure. Note that "parts" and "%" mean "parts by mass" and "mass%", respectively.

First, constituent components of epoxy resin compositions for adhesives used in examples and comparative examples were prepared.

### Epoxy Resin (A)

- Epoxy resin 1: bisphenol-A epoxy resin (A1-1) ("jER1001" manufactured by Mitsubishi Chemical Corporation; solid at ordinary temperature)
- Epoxy resin 2: bisphenol-F epoxy resin (A2-1) ("jER807" manufactured by Mitsubishi Chemical Corporation; liquid at ordinary temperature)
- Epoxy resin 3: bisphenol-F epoxy resin (A2-2) ("jER4005P" manufactured by Mitsubishi Chemical Corporation; solid at ordinary temperature)
- Epoxy resin 4: dispersion of rubber-modified (CTBN-modified) epoxy resin (A3) (solid at ordinary temperature) in 15% bisphenol-A epoxy resin (A1-2) (liquid at ordinary temperature) ("EPR-1630" manufactured by ADEKA Corporation) [rubber-modified epoxy resin (A3) : bisphenol-A epoxy resin (A1-2) = 85:15]
- Epoxy resin 5: phenol aralkyl epoxy resin (A4-1) ("YX7700" manufactured by Mitsubishi Chemical Corporation; solid at ordinary temperature)
- Epoxy resin 6: biphenyl epoxy resin (A4-2) ("YX4000" manufactured by Mitsubishi Chemical Corporation; solid at ordinary temperature)

### Curing Agent (B)

- Curing agent (B-1): dicyandiamide ("DICY7" manufactured by Mitsubishi Chemical Corporation)

### Minute Polymer Particles with Core-Shell Structure (C)

- Minute polymer particles with a core-shell structure 1: dispersion of core-shell rubber (C-1) in 60% bisphenol-A epoxy resin (A1-3) (liquid at ordinary temperature) ("Kane Ace MX-154" manufactured by KANEKA Corporation) [minute polymer particles with a core-shell structure (C-1) : bisphenol-A epoxy resin (A1-3) = 40:60]
- Minute polymer particles with a core-shell structure 2: dispersion of core-shell rubber (C-2) in 3% bisphenol-A epoxy resin (A1-4) (liquid at ordinary temperature) and 59% bisphenol-F epoxy resin (A2-3) (liquid at ordinary temperature) ("KANE-ACE MX-267" manufactured by KANEKA Corporation) [minute polymer particles with a core-shell structure (C-2) : bisphenol-A epoxy resin (A1-4) : bisphenol-F epoxy resin (A2-3) = 38:3:59]

### Curing Accelerator (D)

- Curing accelerator (D-1): 2,4-diamino-6-(2-methylimidazolyl-(1))-ethyl-s-triazine ("2MZA-PW" manufactured by Shikoku Chemicals Corporation)

### Production of Epoxy Adhesive

### Example 1

After 20 parts of the epoxy resin 2, 10 parts of the epoxy resin 3, 20 parts of the epoxy resin 4, 40 parts of the epoxy resin 5, and 10 parts of the minute polymer particles with a core-shell structure 1 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An adhesive was thus obtained. The adhesive of Example 1 was solid at ordinary temperature. The viscosity of the adhesive at 60°C was 160 Pa s.

### Example 2

After 10 parts of the epoxy resin 2, 10 parts of the epoxy resin 3, 20 parts of the epoxy resin 4, 40 parts of the epoxy resin 5, and 20 parts of the minute polymer particles with a core-shell structure 2 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An adhesive was thus obtained. The adhesive of Example 2 was solid at ordinary temperature.

### Example 3

After 10 parts of the epoxy resin 2, 10 parts of the epoxy resin 3, 20 parts of the epoxy resin 4, 40 parts of the epoxy resin 6, and 20 parts of the minute polymer particles with a core-shell structure 2 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An adhesive was thus obtained. The adhesive of Example 3 was solid at ordinary temperature.

### Example 4

After 10 parts of the epoxy resin 2, 10 parts of the epoxy resin 3, 40 parts of the epoxy resin 4, 30 parts of the epoxy resin 5, and 10 parts of the minute polymer particles with a core-shell structure 1 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An adhesive was thus obtained. The adhesive of Example 4 was solid at ordinary temperature.

### Example 5

After 10 parts of the epoxy resin 2, 10 parts of the epoxy resin 3, 20 parts of the epoxy resin 4, 40 parts of the epoxy resin 5, and 20 parts of the minute polymer particles with a core-shell structure 1 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An adhesive was thus obtained. The adhesive of Example 5 was solid at ordinary temperature.

### Example 6

After 17 parts of the epoxy resin 2, 25 parts of the epoxy resin 4, 38 parts of the epoxy resin 5, and 20 parts of the minute polymer particles with a core-shell structure 1 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An epoxy resin composition for an adhesive was thus obtained. The adhesive of Example 6 was solid at ordinary temperature.

### Example 7

After 15 parts of the epoxy resin 1, 5 parts of the epoxy resin 2, 25 parts of the epoxy resin 4, 40 parts of the epoxy resin 5, and 15 parts of the minute polymer particles with a core-shell structure 2 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An epoxy resin composition for an adhesive was thus obtained. The adhesive of Example 7 was solid at ordinary temperature.

### Example 8

After 20 parts of the epoxy resin 1, 20 parts of the epoxy resin 2, 20 parts of the epoxy resin 4, 20 parts of the epoxy resin 5, and 20 parts of the minute polymer particles with a core-shell structure 2 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An epoxy resin composition for an adhesive was thus obtained. The adhesive of Example 8 was solid at ordinary temperature.

### Example 9

After 25 parts of the epoxy resin 1, 20 parts of the epoxy resin 2, 15 parts of the epoxy resin 4, 20 parts of the epoxy resin 5, and 20 parts of the minute polymer particles with a core-shell structure 2 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An epoxy resin composition for an adhesive was thus obtained. The adhesive of Example 9 was solid at ordinary temperature.

### Comparative Example 1

After 5 parts of the epoxy resin 2, 20 parts of the epoxy resin 4, 55 parts of the epoxy resin 5, and 20 parts of the minute polymer particles with a core-shell structure 1 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An adhesive was thus obtained. The adhesive of Comparative Example 1 was solid at ordinary temperature.

### Comparative Example 2

After 10 parts of the epoxy resin 3, 20 parts of the epoxy resin 4, 30 parts of the epoxy resin 5, and 40 parts of the minute polymer particles with a core-shell structure 1 were mixed, the mixture was stirred to be uniform at 90°C. The mixture was placed in a constant temperature oven at 70°C to set the resin temperature to 70°C, and then 8 parts of the curing agent (B-1) and 2 parts of the curing accelerator (D-1) were further added to the mixture. The resulting mixture was stirred until the curing agent (B-1) and the curing accelerator (D-1) were uniformly dispersed. An adhesive was thus obtained. The adhesive of Comparative Example 2 was solid at ordinary temperature.

The compositions of the adhesives obtained in Examples 1 to 9 and Comparative Examples 1 and 2 above are shown in Table 1. Note that the contents shown in Table 1 are expressed as values rounded to unit, and the content ratios [(A1)/(A2)] and [(A1)/(A3)] shown in Table 1 are expressed as values obtained by rounding the values calculated based on the contents shown in Table 1 to the second decimal place.

The shear adhesion of the adhesives obtained in Examples 1 to 9 and Comparative Examples 1 and 2 above was measured as follows. Table 1 shows the results.

### Shear Adhesion Measurement

The shear adhesion was measured in accordance with the following procedure using an Al (Aluminum) test piece ("Standard Test Piece Al5052P" manufactured by Nippon Testpanel Co., Ltd.) and an Fe (SPCC steel plate) test piece ("Standard Test Piece SPCC-SB" manufactured by Nippon Testpanel Co., Ltd.).

Each of the adhesives obtained as described above was applied to the surface of the Fe test piece (12.5 mm × 25 mm × 1.6 mm thickness) such that the thickness of the adhesive was approximately 0.8 mm, and then the thickness was further adjusted using a spacer from above. Thereafter, the Al test piece (12.5 mm × 25 mm × 1.6 mm thickness) was placed thereon, and two binder clips ("NO. 107" manufactured by LION OFFICE PRODUCTS CORP.) were used to clip the two test pieces together and crimp the test pieces, thus making the thickness of Al/Fe constant.

After crimped, the test pieces were heated in a hot-air drying furnace at 130°C for 20 minutes and were thereby subjected to a curing process, and thus a measurement sample was obtained.

After the measurement sample was cooled to room temperature (25°C), the tensile shear force of the measurement sample was measured in conformity with JIS K6850 using a tensile testing machine ("Autograph AG-X" manufactured by Shimadzu Corporation). Note that the testing speed was 5 mm/minute, and the test was carried out in the environment at 23°C and 50%RH.

### Adhesion Evaluation Criteria

The adhesion was evaluated based on the tensile shear force and the failure mode.

The values at the maximum breaking point of the tensile testing machine were used as the results of the tensile shear test. If the tensile shear force was "15 MPa or more" and the failure mode was "cohesive failure", the results were evaluated as "Very Good". If the tensile shear force was "15 MPa or more" and the failure mode was "partial cohesive failure", the results were evaluated as "Good". If the tensile shear force was "15 MPa or less" and the failure mode was "boundary separation", the results were evaluated as "Poor".

Note that the failure mode was determined as follows. That is, the bonded surfaces of the Al test piece and the Fe test piece were visually and tactually confirmed after separation. If the cured adhesive was attached to 60% or more of the bonded area on both test plates, the failure mode was determined as "cohesive failure". If the cured adhesive was attached to 30% or more and less than 60% of the bonded area on one of the test plates, the failure mode was determined as "partial cohesive failure". If the cured adhesive was attached to less than 30% of the bonded area on one of the test plates, the failure mode was determined as "boundary separation".

### Evaluation of Sheet Formation Appropriateness

The following method was used to confirm whether or not the adhesives obtained in Examples 1 to 9 and Comparative Examples 1 and 2 above were appropriately formed into a sheet. Table 1 shows the results.

Each of the adhesives obtained in Examples 1 to 9 and Comparative Examples 1 and 2 above was placed in a mayonnaise bottle (size: No. 3K). At this time, the height of the adhesive was 1 to 3 cm from the bottom of the mayonnaise bottle. Then, the mayonnaise bottle containing the adhesive was turned upside down such that the mouth of the bottle was on the lower side. The bottle was kept in this state for 30 seconds and was then restored to the original state. Thereafter, it was deemed that dripping occurred in a case where a residue of adhesive drips reached to a position 1.2 times higher than the original height of the adhesive, and the sheet formation appropriateness was evaluated as "Poor". On the other hand, it was deemed that no dripping occurred in a case where a residue of adhesive drips reached to a position less than 1.2 times higher than the original height of the adhesive, and the sheet formation appropriateness was evaluated as "Good".

**Table 1**

| | Epoxy resin (A) | | | | | | | Minute polymer particles with core-shell structure (C) [parts by mass] | Curing agent (B) [parts by mass) | Curing accelerator (D) [parts by mass] | Evaluation | | | |
|---|---|---|---|---|---|---|---|---|---|---|---|---|---|---|
| | Bisphenol-A epoxy resin (A1) [parts by mass] | Bisphenol-F epoxy resin (A2) [parts by mass] | Rubber-modified epoxy resin (A3) [parts by mass] | (A1)/(A2) [content ratio] | (A1)/A3) [content ratio] | Aromatic ring-containing epoxy resin (A4) [parts by mass) | Content of epoxy resin that is solid at ordinary temperature (*1) [mass%] | | | | Adhesion | | | Sheet formation appropriateness |
| | | | | | | | | | | | Evaluation | Failure mode | Tensile shear force [MPa] | |
| Ex. 1 | 9 | 30 | 17 | 0.3 | 0.53 | 40 | 70 | 4 | 8 | 2 | Very Good | Cohesive failure | 18 | Good |
| Ex. 2 | 4 | 32 | 17 | 0.13 | 0.24 | 40 | 73 | 8 | 8 | 2 | Very Good | Cohesive failure | 23 | Good |
| Ex. 3 | 4 | 32 | 17 | 0.13 | 0.24 | 40 | 73 | 8 | 8 | 2 | Very Good | Cohesive failure | 17 | Good |
| Ex. 4 | 12 | 20 | 34 | 0.6 | 0.35 | 30 | 77 | 4 | 8 | 2 | Very Good | Cohesive failure | 25 | Good |
| Ex. 5 | 15 | 20 | 17 | 0.75 | 0.88 | 40 | 73 | 8 | 8 | 2 | Good | Partial cohesive failure | 17 | Good |
| Ex. 6 | 16 | 17 | 21 | 0.94 | 0.76 | 20 | 64 | 8 | 8 | 2 | Good | Partial cohesive failure | 22 | Good |
| Ex. 7 | 19 | 14 | 21 | 1.36 | 0.9 | 40 | 81 | 6 | 8 | 2 | Very Good | Cohesive failure | 18 | Good |
| Ex. 8 | 24 | 32 | 17 | 0.75 | 1.41 | 20 | 62 | 8 | 8 | 2 | Very Good | Cohesive failure | 21 | Good |
| Ex. 9 | 28 | 32 | 13 | 0.88 | 2.15 | 20 | 63 | 8 | 8 | 2 | Good | Partial cohesive failure | 23 | Good |
| Comp. Ex. 1 | 15 | 5 | 17 | 3 | 0.88 | 55 | 78 | 8 | 8 | 2 | Poor | Boundary separation | 26 | Good |
| Comp. Ex. 2 | 27 | 10 | 17 | 2.7 | 1.59 | 30 | 68 | 17 | 8 | 2 | Poor | Boundary separation | 12 | Good |

| | | | | | | | | | | | | | | |
|---|---|---|---|---|---|---|---|---|---|---|---|---|---|---|
| *1 The content (mass%) of the epoxy resin that is solid at ordinary temperature with respect to the entire epoxy resin (A) | | | | | | | | | | | | | | |

As shown in Table 1, regarding the adhesive layers obtained by curing the adhesives of Examples 1 to 9, the tensile shear force was 15 MPa or more, and the failure mode was cohesive failure or partial cohesive failure. The possible reason for this is that the ratio of the rigid bisphenol-A skeleton of the bisphenol-A epoxy resin (A1) was reduced and the flexible bisphenol-F skeleton of the bisphenol-F epoxy resin (A2) was increased by setting the ratio of the content of (A1) to the content of (A2) to be smaller than or equal to a specific value, and therefore, the adhesion and flexibility were improved, as a result of which the failure mode was cohesive failure or partial cohesive failure while high shear force was maintained.

On the other hand, it is thought that, since the addition amount of the bisphenol-A epoxy resin (A1) relative to the bisphenol-F epoxy resin (A2) was large in the adhesive layers obtained by curing the adhesives of Comparative Examples 1 and 2, the flexibility and adhesion were poor, and therefore, boundary separation occurred in both Comparative Examples 1 and 2.

### Production of Adhesive Sheet

### Example 10

The adhesive obtained in Example 1 was applied to a base film constituted by a PET film provided with releasability using silicone, and a glass-fiber nonwoven fabric (with a density of 0.16 g/cm³ and a thickness of 0.77 mm) was impregnated with this adhesive. Another base film was inserted from the other side, and an adhesive sheet (the thickness of the adhesive sheet was 0.8 mm) was produced using a laminator.

The thus-obtained adhesive sheet was used to measure the tensile shear force using a method similar to the above-mentioned method. The adhesive sheet in which the epoxy adhesive according to the present disclosure was used had excellent tensile shear adhesion.

While specific modes of the present disclosure are described in the examples above, the examples above are for illustrative purpose only and should not be construed as restrictive. Various alterations that are apparent to those skilled in the art are all intended to be within the scope of the present disclosure.

### Industrial Applicability

The epoxy adhesive according to the present disclosure can be used in structural members (e.g., skeleton components and panel components) for a transport apparatus such as a vehicle, aircraft, or vessel, and architectural, building and other members. The epoxy adhesive is useful particularly in structural members for a vehicle.

## Claims

1. An epoxy adhesive comprising:
an epoxy resin (A); and
a curing agent (B),
wherein the epoxy resin (A) includes a bisphenol-A epoxy resin (A1), a bisphenol-F epoxy resin (A2), and a rubber-modified epoxy resin (A3), and
a content ratio [(A1)/(A2)] of the bisphenol-A epoxy resin (A1) to the bisphenol-F epoxy resin (A2) is less than 2.7.

2. The epoxy adhesive according to claim 1, comprising
at least one selected from the group consisting of a carboxy group terminated butadiene nitrile rubber modified epoxy resin and a nitrile butadiene rubber modified epoxy resin, as the rubber-modified epoxy resin (A3).

3. The epoxy adhesive according to claim 1 or 2,
wherein a content of the rubber-modified epoxy resin (A3) is 5 to 45 mass% with respect to the entire epoxy resin (A).

4. The epoxy adhesive according to any one of claims 1 to 3,
wherein the epoxy resin (A) further includes an aromatic ring-containing epoxy resin (A4) that is solid at 25°C and is different from the (A1) to (A3).

5. The epoxy adhesive according to any one of claims 1 to 4,
wherein a content of the epoxy resin that is solid at 25°C is 50 mass% or more with respect to the entire epoxy resin (A).

6. The epoxy adhesive according to any one of claims 1 to 5,
wherein the curing agent (B) includes dicyandiamide.

7. The epoxy adhesive according to any one of claims 1 to 6, further comprising
minute polymer particles with a core-shell structure (C).

8. The epoxy adhesive according to any one of claims 1 to 7,
wherein the epoxy adhesive is solid at 25°C.

9. The epoxy adhesive according to any one of claims 1 to 8,
wherein the epoxy adhesive has a viscosity of 0.01 to 5000 Pa·s at 60°C.

10. The epoxy adhesive according to any one of claims 1 to 9,
wherein the epoxy adhesive is to be used to bond dissimilar materials.

11. An adhesive sheet comprising
the epoxy adhesive according to any one of claims 1 to 9.

12. An adhesive sheet for bonding dissimilar materials, comprising the epoxy adhesive according to claim 10.

13. An adhesive sheet comprising
an adhesive layer including an epoxy adhesive that includes an epoxy resin (A) and a curing agent (B), the epoxy resin (A) including a bisphenol-A epoxy resin (A1), a bisphenol-F epoxy resin (A2) and a rubber-modified epoxy resin (A3),
wherein the adhesive layer has a thickness of 0.1 to 2 mm.

14. The adhesive sheet according to claim 13,
wherein the adhesive layer is an adhesive layer constituted by a nonwoven fabric that is impregnated with the epoxy adhesive.

15. The adhesive sheet according to claim 13 or 14, comprising
a release film on at least one surface of the adhesive layer.
